# EUROPEAN PATENT SPECIFICATION

(11) **EP 4 220 832 B1**
(45) Date of publication and mention of the grant of the patent: **06.05.2026**
(21) Application number: 22870198.3
(22) Date of filing: 06.09.2022
(51) Int. Cl.: H01M 50/242, H01M 50/211, H01M 50/209, H01M 50/204

(54) **BATTERY PACK**
BATTERIEPACK
BLOC-BATTERIE

(30) Priority: 16.09.2021 KR 20210124084
(43) Date of publication of application: 02.08.2023
(73) Proprietor: LG Energy Solution, Ltd., Seoul 07335 (KR)
(72) Inventor: KIM, Dooseung, Daejeon 34122 (KR); YANG, Jaehun, Daejeon 34122 (KR); LEE, Jung Hoon, Daejeon 34122 (KR); KIM, Seho, Daejeon 34122 (KR); PARK, Jeong Gi, Daejeon 34122 (KR)
(74) Representative: Goddar, Heinz J.
(86) International application number: PCT/KR2022/013389
(87) International publication number: WO 2023/043113

(56) References cited:
- EP-A1- 3 528 305
- WO-A1-2021/034420
- CN-A- 113 258 124
- CN-U- 208 118 922
- CN-U- 215 578 776
- JP-A- 2016 103 491
- KR-A- 20030 072 291
- KR-A- 20190 088 802
- KR-A- 20210 110 695
- KR-B1- 101 255 250
- KR-B1- 102 065 099
- US-A1- 2008 182 159
- M. AKBULUT, H. EROL: "Damping layer application in design of robust battery pack space equipment", APPLIED ACOUSTICS, vol. 150, 13 February 2019 (2019-02-13), pages 81 - 88, XP002811380, DOI: https://doi.org/10.1016/j.apacoust.2019.01.036

## Description

### [TECHNICAL FIELD]

### Cross Citation with Related Application(s)

This application claims the benefit of Korean Patent Application No. 10-2021-0124084 filed on September 16, 2021 with the Korean Intellectual Property Office.

The present disclosure relates to a battery pack, and more particularly to a battery pack that reinforces rigidity and can flexibly cope with external vibrations and impacts.

### [BACKGROUND]

Secondary batteries, which are easily applied to various product groups and has electrical characteristics such as high energy density, are universally applied not only for a portable device but also for an electric vehicle or a hybrid electric vehicle, an energy storage system or the like, which is driven by an electric driving source. Such secondary battery is attracting attention as a new environment-friendly energy source for improving energy efficiency since it gives a primary advantage of remarkably reducing the use of fossil fuels and also does not generate by-products from the use of energy at all.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Generally, the lithium secondary battery may be classified based on the shape of the exterior material into a cylindrical or prismatic secondary battery in which the electrode assembly is mounted in a metal can, and a pouch-type secondary battery in which the electrode assembly is mounted in a pouch made of an aluminum laminate sheet.

Recently, along with a continuous rise of the necessity for a large-capacity secondary battery structure, including the utilization of the secondary battery as an energy storage source, there is a growing demand for a battery pack of a medium- and large-sized module structure which is an assembly of battery modules in which a plurality of secondary batteries are connected in series or in parallel. In such a battery module, a plurality of battery cells are connected to each other in series or in parallel to form a battery cell stack, thereby improving capacity and output. In addition, a plurality of battery modules may be mounted together with various control and protection systems such as a BMS (battery management system) and a cooling system to form a battery pack.

However, the battery pack is composed of a structure in which a large number of battery modules are combined, and thus it may be heavy. In this case, there is a problem that it is not suitable for loading a plurality of batteries on a moving means such as an automobile.

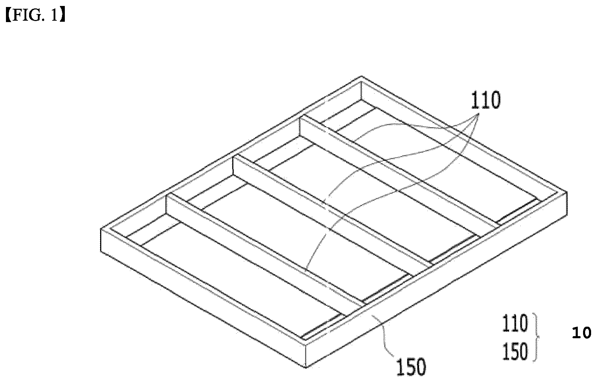

Fig. 1 is a diagram showing a battery pack frame of a conventional battery pack.

A typical battery pack frame 10 may include a side surface frame 150 extending along the edge of the lower pack frame and at least two inner beams 110 that partition the inside of the lower pack frame while being in contact with the inner surface of the side surface frame 150.

The battery pack frame 10 may be formed of a metal material. In this case, there is a limit in absorbing vibration or impact applied from the outside, which may lead to a reduction of durability and stability of the battery pack.

When increasing the thickness of the battery pack frame 10 to overcome this problem, the durability and stability can be improved, but the volume and weight of the battery itself may increase. Therefore, in comparison with the general battery pack 10, only a small number of batteries can be mounted in a device such as an automobile, and thus, energy required for driving the device cannot be provided.

Therefore, in order to overcome the above-mentioned problems, there is a need to apply a battery pack structure that not only absorbs vibrations or impacts applied from the outside to increase the durability and stability of the battery pack, but also does not decrease the energy density of the battery.

The prior art relevant to the present invention is given by WO 2021/034420 A1, EP 3 528 305 A1 and KR 2019 0088802 A. It is known from the prior art a modular composite battery enclosure containing multiple individual composite structures attached together. The individual composite structures form covers that enclose an open area for housing a battery system of battery cells and cooling devices. The composite battery enclosures are lightweight and made of materials that can function to absorb energy and insulate the battery housing area. The composite structures contain a core material adhered and sandwiched between fiber layers.

### [DETAILED DESCRIPTION OF THE INVENTION]

### [Technical Problem]

The present disclosure has been designed to solve the above-mentioned problems and an object of the present disclosure is to provide a battery pack that absorbs external vibrations and impacts, improves durability, and reinforces rigidity, and a device including the same.

### [Technical Solution]

The present invention is defined according to subject matter of the appended independent claim. Particular embodiments are given by the additional features of the appended dependent claims.

According to the present disclosure, there is provided a battery pack comprising: a lower pack frame on which a plurality of battery modules are mounted; an upper pack frame located in the upper part of the plurality of battery modules; and a rigid beam included in the lower pack frame, wherein the rigid beam is formed of a reinforcing member including a viscous damper or a viscoelastic damper.

Two or more reinforcing members may be formed inside the rigid beam.

The lower pack frame may include a bottom part on which the plurality of battery modules are mounted, side surface frames that are extended along each edge of the bottom surface of the lower pack frame, and an inner beam that partitions an interior of the lower pack frame.

The rigid beam may be included in the inner beam.

The battery pack may further include an additional beam located while being in contact with the inner beam.

The rigid beam may be included in the side surface frame.

The battery pack may further include an additional beam located while being in contact with one surface of the side surface frame.

One surface of the additional beam is in contact with the bottom part, and another surface of the additional beam may be located while being in contact with the side surface frame.

The lower pack frame may include a bottom part on which the plurality of battery modules are mounted, side surface frames that are extended along each edge of the bottom surface of the lower pack frame, and an inner beam that partitions an interior of the lower pack frame, and the rigid beam may be weld-coupled with at least one of the side surface frame and the inner beam.

In the battery pack, the rigid beam is formed of a hollow structure.

The reinforcing member is located inside the rigid beam, and fastening parts located at both ends of the reinforcing member are located while being in contact with an inner surface of the rigid beam.

The reinforcing member may be located vertically on the basis of the bottom part of the lower pack frame.

The reinforcing member may be located horizontally on the basis of the bottom part of the lower pack frame.

### [Advantageous Effects]

According to embodiments of the present disclosure, by applying the battery pack frame structure including the reinforcing member, it is possible to absorb impacts or vibrations applied to the battery from the outside and thus improve durability and rigidity of the battery pack.

In addition, since the thickness of the battery pack frame itself does not increase, the efficiency of the battery can be maintained without reducing the energy density per weight and volume of the battery.

### [BRIEF DESCRIPTION OF THE DRAWINGS]

Fig. 1 is a diagram showing a battery pack frame of a conventional battery pack;
Fig. 2 is a perspective view of a battery pack according to an embodiment of the present disclosure;
Fig. 3 is an exploded perspective view of the battery pack of Fig. 2 ;
Fig. 4 is a cross-sectional view taken along line A-A' of Fig. 3;
Fig. 5 is a diagram showing the reinforcing member of Fig. 4;
Fig. 6 is a cross-sectional view taken along line A-A' of Fig. 3;
Fig. 7 is a diagram showing the reinforcing member of Fig. 6;
Fig. 8 is a cross-sectional view illustrating a process in which the reinforcing member of Fig. 6 absorbs an external impact;
Figs. 9 to 13 are diagrams illustrating a form in which a rigid beam is located on a battery pack frame; and
Figs. 14 to 15 are cross-sectional views of a battery pack frame including a reinforcing member according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them.

The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

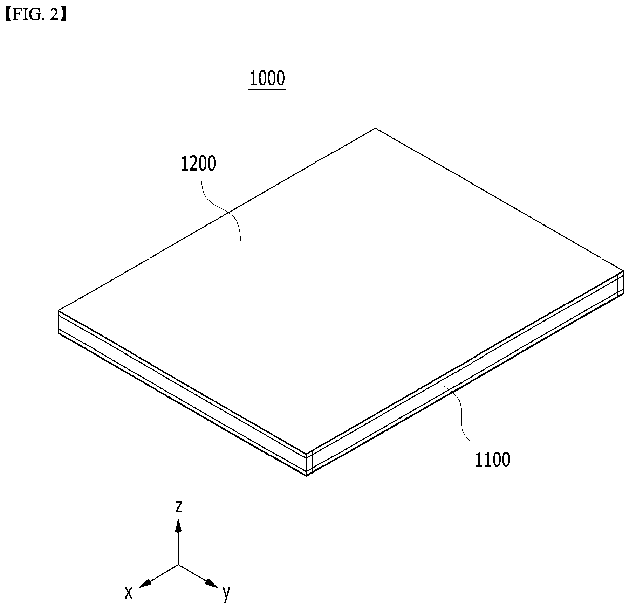

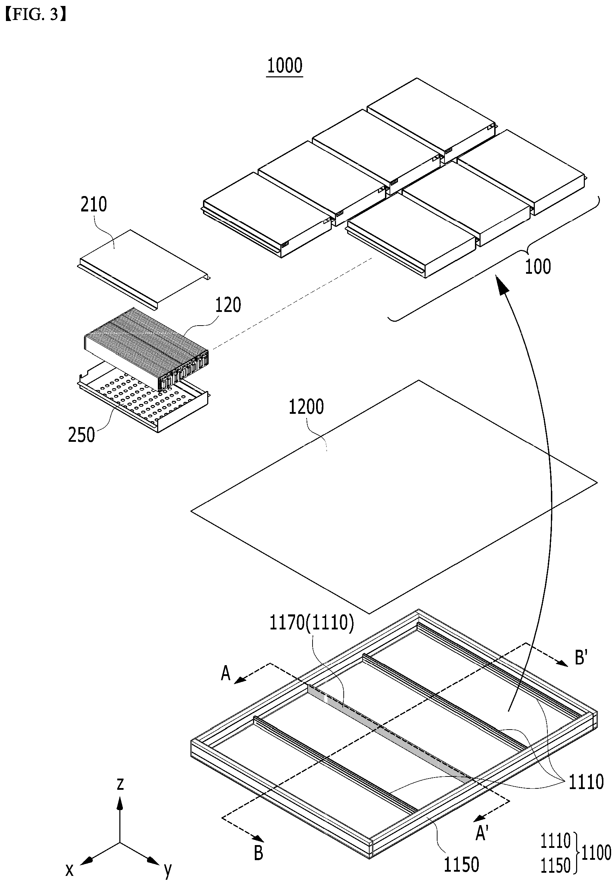

Fig. 2 is a perspective view of a battery pack according to an embodiment of the present disclosure. Fig. 3 is an exploded perspective view of the battery pack of Fig. 2.

Referring to Figs. 2 and 3, the battery pack 1000 according to the present embodiment includes a lower pack frame 1100 on which a plurality of battery modules 100 are mounted, and an upper pack frame 1200 located on the upper part of the battery module 100. The lower pack frame 1100 may include a bottom part on which a plurality of battery modules 100 are mounted, and a rigid beam 1170, and the rigid beam 1170 may be formed of a reinforcing member. The lower pack frame 1100 and the upper pack frame 1200 may be coupled to each other to seal the interior of the battery pack 1000.

The battery module 100 may include a battery cell stack 120 in which a plurality of battery cells are stacked along a preset direction, and module frames 210 and 250. The module frames 210 and 250 may include an upper frame 210 and a lower frame 250, and the battery cell stack 120 may be mounted between the upper frame 210 and the lower frame 250 to form a battery module 100. However, the module frames 210 and 250 are not limited to the contents described above, and may be a mono frame in the form of a metal plate in which upper and lower surfaces and both side surfaces are integrated.

Here, the type of the battery cell is not particularly limited, and so it may be a pouch-type secondary battery or a prismatic secondary battery, but the pouch-type secondary battery is preferable.

The rigid beam 1170 may be formed of a reinforcing member. The reinforcing member 2000 may be a damper. When an object receives vibration or impact from the outside and generates kinetic energy, the damper quickly dissipates it as heat energy due to friction, etc., so that the displacement generated by vibration or impact applied from the outside can calm down and attenuate at an early stage.

The rigid beam 1170 includes a reinforcing member therein. The reinforcing member included in the rigid beam 1170 may be formed in one or more numbers. That is, two or more reinforcing members may be formed inside the rigid beam 1170.

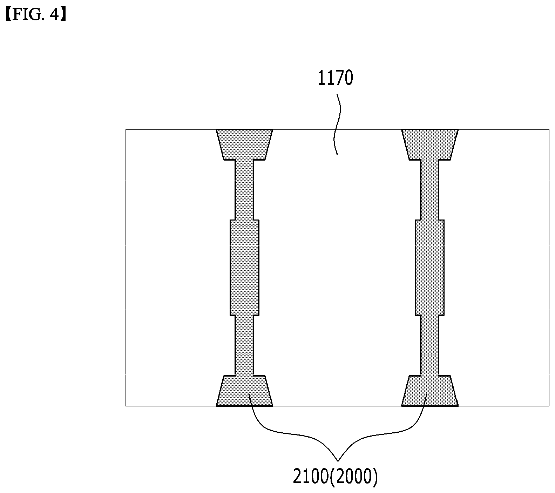

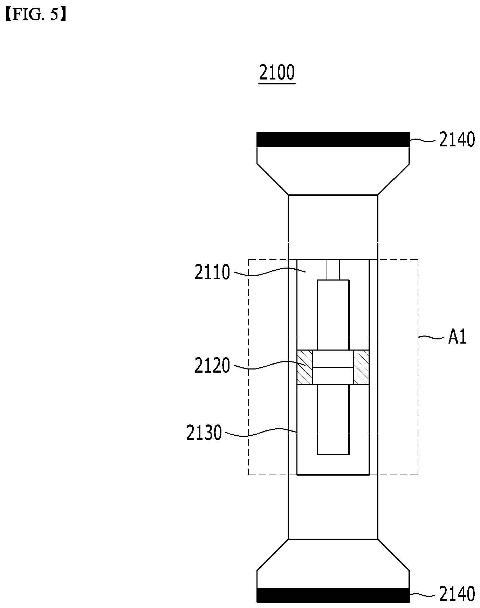

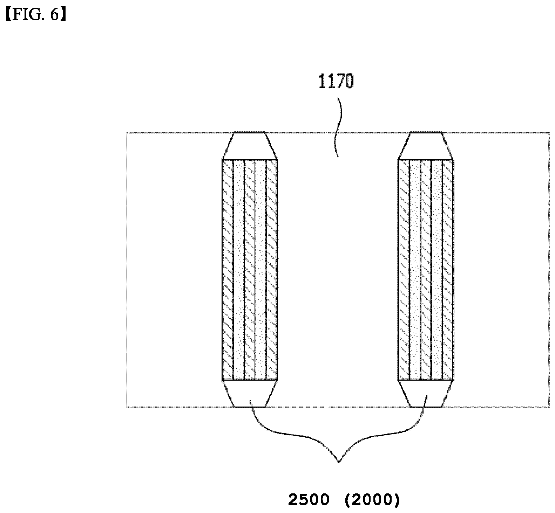

The reinforcing member is a viscous damper 2100 (Figs. 4 and 5 ) or a viscoelastic damper 2500 (Figs. 6 to 8). The rigid beam 1170 includes a reinforcing member and thus absorb vibration or impact applied to the battery from the outside to improve the rigidity and durability of the battery.

The rigid beam 1170 can be manufactured by a die casting method in which at least one reinforcing member is arranged in a steel mold and then a metal is injected into the steel mold. The metal constituting the rigid beam 1170 may be, for example, aluminum.

However, the manufacture of the rigid beam 1170 is not limited to the manufacturing method described above. For example, the rigid beam 1170 may be a hollow structure. In this case, after the reinforcing member is located inside the rigid beam 1170 of the hollow structure, it can be manufactured so that both ends of the reinforcing member are located while being in contact with the inner surface of the rigid beam 1170.

The rigid beam 1170 may be located while being in contact with the at least two inner beams 1110 and the side surface frame 1150. More specifically, the lower surface of the rigid beam 1170 is in contact with the bottom surface of the lower pack frame 1100, and the side surface of the rigid beam 1170 may be in contact with at least two inner beams 1110 and one side surface of the side surface frame 1150. In this case, the rigid beam 1170 can be weld-coupled with the lower pack frame 1100 or can be coupled using a fastening member. For example, it may be coupled using a bolt, a nut, or a rivet, or may be coupled by applying an adhesive. Preferably, the adhesive may be a structural adhesive. In addition, the rigid beam 1170 may be located while replacing a part or the whole of the inner beam 1110 and the side surface frame 1150.

The lower pack frame 1100 has at least two inner beams 1110 and side surface frames 1150 formed on the bottom surface of the lower pack frame 1100. More specifically, the lower pack frame 1100 includes at least two inner beams 1110 and side surface frames 1150 that are protruded toward the upper frame 1200 from the bottom surface of the lower pack frame 1100. Here, the bottom surface of the lower pack frame 1100 may be coupled with at least two inner beams 1110 and side surface frames 1150 by a method such as welding.

The side surface frame 1150 may be extended along the edge of the bottom surface of the lower pack frame 1100. More specifically, the side surface frame 1150 may be extended along each edge of the bottom surface of the lower pack frame 1100. Here, the upper surface of the side surface frame 1150 may be in contact with the upper pack frame 1200. In this case, the upper surface of the side surface frame 1150 and the upper pack frame 1200 may be coupled to each other by a method such as welding, thereby sealing the interior of the battery pack 1000.

At least two inner beams 1110 may be a cross beam or a vertical beam, and they may be formed by extrusion molding.

The side surface frame 1150 and the at least two inner beams 1110 may partition the plurality of battery modules 100 from each other. In other words, a plurality of battery modules 100 may be respectively arranged in a region located between the side surface frame 1150 and the at least two inner beams 1110. More specifically, in the battery pack 1000, a pair of battery modules 100 may be arranged between a pair of inner beams 1110 and a side surface frame 1150 located adjacent to each other among at least two inner beams 1110. Here, the pair of battery modules 100 may be spaced apart, but they may be arranged in a direction facing each other. As an example, the pair of battery modules 100 may be disposed in a direction in which end plates (not shown) included in each battery module 100 face each other.

In this case, the at least two inner beams 1110 may be spaced apart from each other. The distance at which the at least two inner beams 1110 are spaced apart may be equal to or greater than the size of the battery module 100. In addition, an end of the inner beam 1110 may be in contact with an inner surface of the side surface frame 1150. More specifically, both ends of the inner beam 1110 may be in contact with the inner surface of the side surface frame 1150, respectively.

Thereby, the at least two inner beams 1110 and the side surface frame 1150 surround the plurality of battery modules 100, which can thus protect each battery module 100 from external impact.

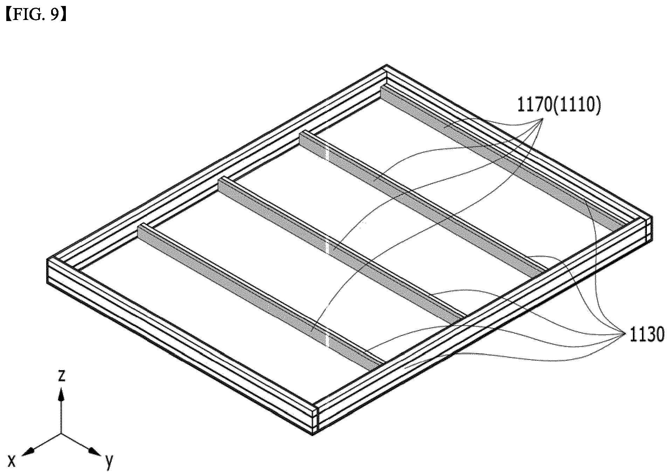

At least two inner beams 1110 may include a rigid beam 1170, and the side surface frame 1150 may include a rigid beam 1170. Fig. 3 shows the case where the inner beam 1110 includes a rigid beam 1170. However, the embodiment of the present disclosure is not limited to this drawing, and can be variously modified from the standpoint of a person skilled in the art. By way of example, various embodiments are described in Figs. 9 to 13, which are described below.

Fig. 4 is a cross-sectional view taken along line A-A' of Fig. 3. Fig. 5 is a diagram showing the reinforcing member of Fig. 4.

Referring to Figs. 4 and 5, the rigid beam 1170 includes a viscous damper 2100, which is a reinforcing member 2000. That is, at least one viscous damper 2100 may be provided inside the rigid beam 1170. The viscous damper 2100 may be located perpendicular to the interior of the rigid beam 1170.

A1 represents the inner cross section of the viscous damper 2100. This also corresponds to a cross section taken along line B-B' in Fig. 3. Referring to this, the viscous damper 2100 may include a viscous fluid 2110 and a piston 2120 located inside a cylinder 2130.

When kinetic energy such as vibration or impact is applied to the battery from the outside, the vibrational energy is dissipated into other forms of energy such as heat energy, while the piston 2120 and the high-viscosity viscous fluid 2110 of the viscous damper 2100 are moving, thereby capable of offsetting vibrations, impacts or the like. That is, the viscous damper 2100 can reduce the force and displacement applied to the battery to prevent damage to the structure.

The viscous damper 2100 includes fastening parts 2140 at its both ends, respectively. Although not shown in the drawing, when the rigid beam 1170 has a hollow structure, the fastening part 2140 may be coupled with the inner surface of the rigid beam 1170, respectively. In this case, the fastening part 2140 may be weld-coupled with the inner surface of the rigid beam 1170, or may be coupled using a fastening member such as a bolt, a nut, or a rivet, or may be coupled by applying an adhesive.

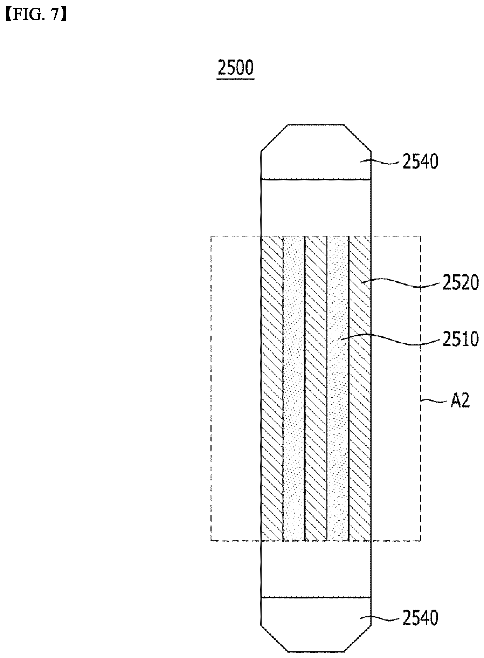

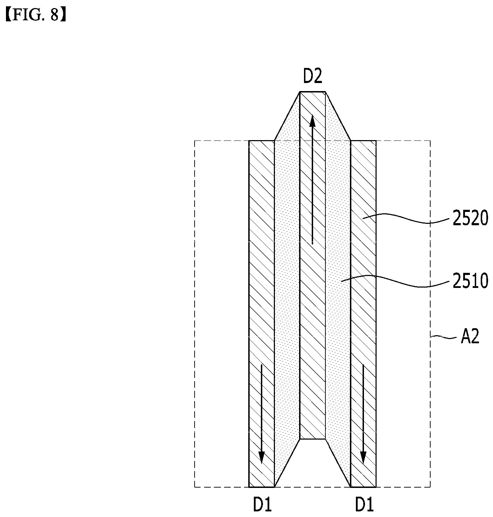

Fig. 6 is a cross-sectional view taken along line A-A' of Fig. 3. Fig. 7 is a diagram showing the reinforcing member of Fig. 6. Fig. 8 is a cross-sectional view illustrating a process in which the reinforcing member of Fig. 6 absorbs an external impact.

Referring to Figs. 6 to 8 , the rigid beam 1170 includes a viscoelastic damper 2500 which is a reinforcing member 2000. That is, at least one or more viscoelastic dampers 2500 may be provided inside the rigid beam 1170. The viscoelastic damper 2500 may be vertically located inside the rigid beam 1170.

A2 represents the inner cross section of the viscoelastic damper 2500. This also corresponds to a cross section taken along line B-B' in Fig. 3. Referring to this, the viscoelastic damper 2500 may include an elastic body 2510 and a steel plate 2520. The elastic body 2510 and the steel plate 2520 have a structure where they are alternately stacked, and surfaces with which the elastic body 2510 and the steel plate 2520 are in contact may be adhered to each other. The elastic body 2510 may be formed of a rubber material, preferably highly damping rubber. However, the elastic body 2510 is not limited thereto as long as it is a material having elasticity.

When kinetic energy such as vibration or impact is applied to the viscoelastic damper 2500 from the outside, the steel plate 2520 moves in the direction D1 in which vibration or impact is applied, and in the direction D2 opposite thereto, and the shape of the elastic body 2510 in contact with the steel plate 2520 is changed according to the movement of the steel plate 2520, thereby capable of offsetting vibration or impact.

That is, vibrational energy can be dissipated into other forms of energy such as heat energy through the movement of the steel plate 2520 and the elastic body 2510, thereby offsetting vibrations and impacts. Therefore, the viscoelastic damper 2500 can reduce the force and displacement applied to the battery and thus prevent damage to the structure.

The viscoelastic damper 2500 includes fastening portions 2540 at its both ends, respectively. Although not shown in the drawings, when the rigid beam 1170 has a hollow structure, the fastening portion 2540 may be coupled with the inner surface of the rigid beam 1170, respectively. In this case, the fastening part 2540 may be weld-coupled with the inner surface of the rigid beam 1170, or may be coupled using a fastening member such as a bolt, a nut, or a rivet, or may be coupled by applying an adhesive.

Figs. 9 to 13 are diagrams illustrating a form in which a rigid beam is located on a battery pack frame. However, these drawings are for illustrative purposes, and the embodiments of the present disclosure are not limited thereto, and may include all embodiments that can be modified from the standpoint of a person skilled in the art.

Referring to Figs. 9 to 13, a rigid beam 1170 and an additional beam 1130 may be located in the lower pack frame 1100.

The rigid beam 1170 may be located while partitioning the interior of the lower pack frame 1100, and the rigid beam 1170 may be an inner beam 1110. Further, the rigid beam 1170 may be located to extend along the edge of the bottom surface of the lower pack frame 1100, and the rigid beam 1170 may be a side surface frame 1150. One surface of the rigid beam 1170 may be located while being in contact with the bottom part of the lower pack frame 1100. That is, the at least two inner beams 1110 may include a rigid beam 1170, and the side surface frame 1150 may include a rigid beam 1170.

The additional beam 1130 is a beam formed of a metal material without including a rigid member. The additional beam 1130 may be located while partitioning the interior of the lower pack frame 1100 or may be located to extend along the edge of the bottom surface of the lower pack frame 1100.

Referring to Fig. 9, the additional beam 1130 may be located inside the lower pack frame 1100 together with the inner beam 1110 which is a rigid beam 1170.

The additional beam 1130 may be located to extend along the edge of the bottom surface of the lower pack frame 1100. One surface of the additional beam 1130 may be located while being in contact with the bottom part of the lower pack frame 1100.

In addition, the additional beam 1130 may be located while being in contact with one surface of the inner beam 1110, which is a rigid beam 1170. Specifically, one surface of the additional beam 1130 may be located while being in contact with the bottom part of the lower pack frame 1100, and the other surface of the additional beam 1130 may be located while being in contact with one surface of the inner beam 1110.

The additional beam 1130 may be weld-coupled with the bottom surface of the lower pack frame 1100 and the inner beam 1110, or may be coupled using a fastening member such as a bolt, a nut, or a rivet, or may be coupled with an adhesive.

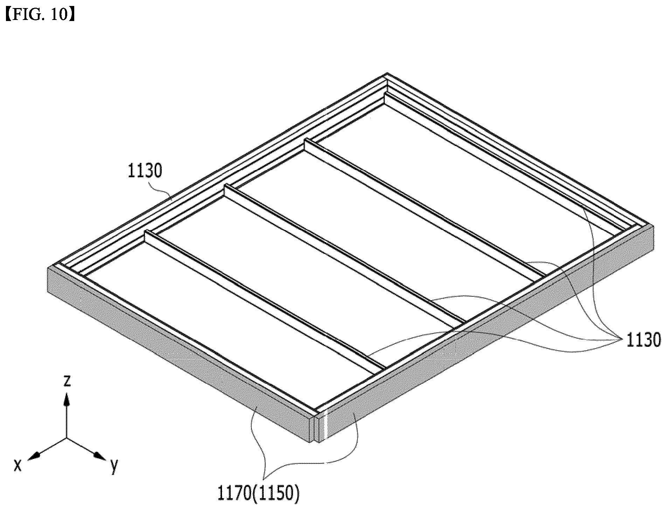

Fig. 10 is a modification of the embodiment of the present disclosure shown in Fig. 9, and the details of the same configurations as those described above are omitted.

Referring to Fig. 10, the additional beam 1130 may be located while being in contact with the side surface frame 1150 which is a rigid beam 1170. Specifically, one surface of the additional beam 1130 may be located while being in contact with one surface of the side surface frame 1150. One surface of the additional beam 1130 may be located while being in contact with the inner surface of the side surface frame 1150.

In addition to this, the additional beam 1130 may be located while partitioning the interior of the lower pack frame 1100. The additional beam 1130 may be located in an area where the inner beam 1110, which is a rigid beam 1170, does not exist, and also may be located while partitioning the interior of the lower pack frame 1100. That is, the additional beam 1130 may be located while replacing the inner beam 1110.

In this case, instead of the inner beam 1110 including the rigid beam 1170, an additional beam 1130 may separate space the battery module 100 while partitioning the interior of the lower pack frame 1100.

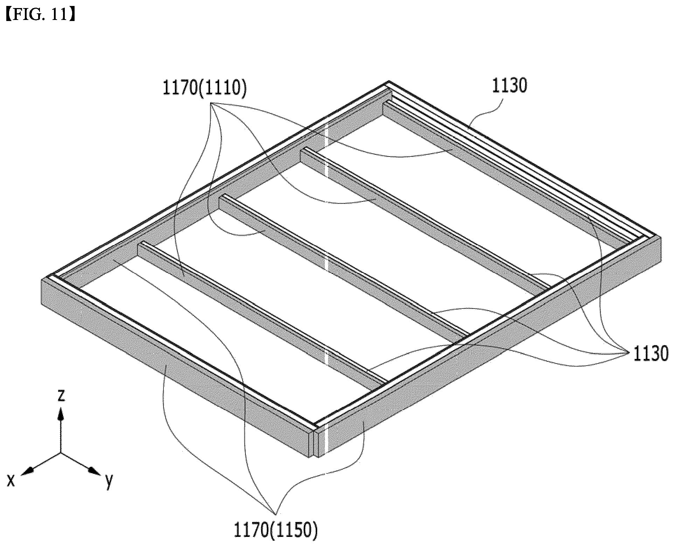

Fig. 11 is a modification of the embodiment of the present disclosure shown in Figs. 9 and 10, and the details of the same configurations as those described above are omitted.

Referring to Fig. 11, the additional beam 1130 may be located while being in contact with the side surface frame 1150 which is the rigid beam 1170 and the inner beam 1110.

Specifically, the additional beam 1130 may be located while being in contact with one surface of the side surface frame 1150. That is, the additional beam 1130 may be located while being in contact with the inner surface or the outer surface of the side surface frame 1150.

Specifically, one surface of the additional beam 1130 is in contact with the bottom part of the lower pack frame 1100, and the other surface of the additional beam 1130 may be located while being in contact with one surface of the side surface frame 1150. One surface of the additional beam 1130 is in contact with the bottom part of the lower pack frame 1100, and the other surface of the additional beam 1130 may be located while being in contact with the inner surface of the side surface frame 1150. Alternatively, one surface of the additional beam 1130 may be located while being in contact with the outer surface of the side surface frame 1150.

In addition to this, the additional beam 1130 may be located while being in contact with the inner beam 1110. One surface of the additional beam 1130 is in contact with the bottom part of the lower pack frame 1100, and another surface of the additional beam 1130 may be located while being in contact with one surface of the inner beam 1110.

When the additional beam 1130 is located while being in contact with both at least two inner beams 1110 and the side surface frame 1150, the durability and rigidity of the battery may be improved, and the stability of the battery may be improved.

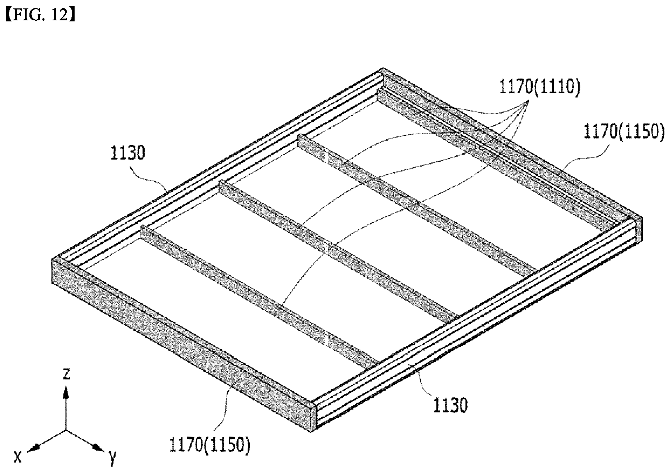

Fig. 12 is a modification of the embodiment of the present disclosure shown in Figs. 9 to 11, and the details of the same configurations as those described above are omitted.

Referring to Fig. 12, the additional beam 1130 is located in an area where the side surface frame 1150, which is a rigid beam 1170, does not exist, and also may be located to extend along the edge of the lower pack frame 1100.

When the additional beam 1130 is located while replacing the inner beam 1110 and/or the side surface frame 1150 which is a lower pack frame 1100, the thickness of the lower pack frame 1100 is kept the same, so that durability and rigidity can be improved while keep the weight and the energy density per volume of the battery constant. In addition, since the rigid beam 1170 may not be located with respect to the whole of the lower pack frame 1100, the manufacturing cost can also be reduced.

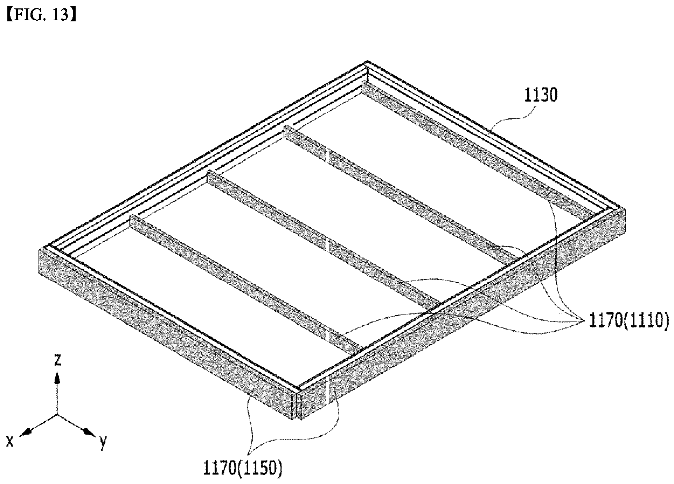

Fig. 13 is a modification of the embodiment of the present disclosure shown in Figs. 9 to 12, and the details of the same configurations as those described above are omitted.

Referring to Fig. 13, the additional beam 1130 may be located while being in contact with the side surface frame 1150 which is a rigid beam 1170.

In addition to this, the additional beam 1130 may be located in an area where the inner beam 1110, which is the rigid beam 1170, does not exist, and also may be located while partitioning the interior of the lower pack frame 1100. That is, the additional beam 1130 may be located while replacing the inner beam 1110.

In summary, the additional beam 1130 can be coupled with a part of the lower pack frame 1100 and at the same time, can be located while replacing a part of the lower pack frame 1100. For example, according to this figure, the additional beam 1130 is located while replacing at least two or more inner beams 1110, and may be located by coupling with the outer surface of the side surface frame 1150. However, the embodiment of the present disclosure is not limited to the shape shown in this drawing, and can be variously modified.

Since the additional beam 1130 can be coupled with a part of the lower pack frame 1100, and at the same time, can be located while replacing a part thereof, the effect of improving the rigidity and durability of the battery can be derived while designing the structure of the battery pack frame as desired by the user.

The present disclosure is not limited to the embodiments shown in the drawings, but includes all embodiments that can be easily modified by a person of ordinary skill in the art. That is, although not shown in the drawings, a person of ordinary skill in the art may modify and carry out the design in various embodiments while variously locating the additional beam 1130 on the lower pack frame 1100.

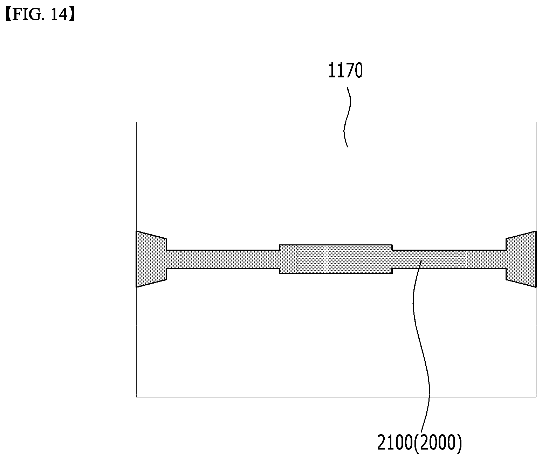

Figs. 14 to 15 are cross-sectional views of a battery pack frame including a reinforcing member according to another embodiment of the present disclosure.

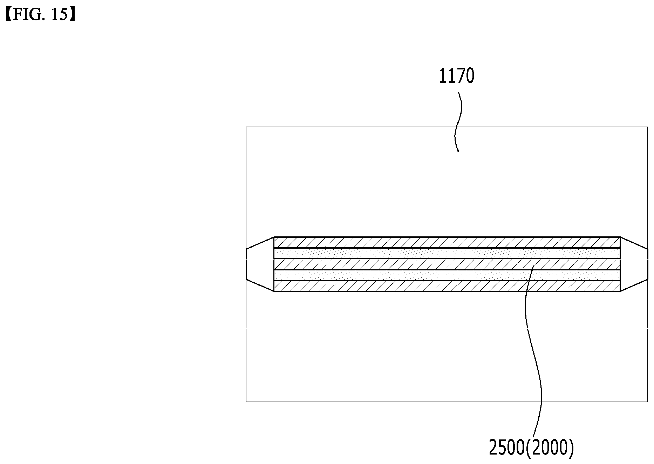

Referring to Figs. 14 and 15, the rigid beam 1170 may include the viscoelastic damper 2100 and the viscoelastic damper 2500 which are the reinforcing members 2000 described above. That is, at least one viscous damper 2100 or viscoelastic damper 2500 may be provided inside the rigid beam 1170. The viscous damper 2100 and the viscoelastic damper 2500 may be horizontally located inside the rigid beam 1170.

As the reinforcing member 2000 is located in various directions inside the rigid beam 1170, it is possible to flexibly absorb vibrations or impacts generated in various directions, thereby improving durability and rigidity of the battery.

In addition, although not shown in the drawings of the present specification, the reinforcing member 2000 may not be located inside the rigid beam 1170, but the reinforcing member 2000 itself may be mounted and located in the lower pack frame 1100. Specifically, the reinforcing member 2000 itself may be located by attaching to one side surface of the at least two or more inner beams 1110 or located by attaching to one side surface of the side surface frame 1150.

Alternatively, the reinforcing member 2000 itself may be located while replacing a part of the lower pack frame 1100. Specifically, the reinforcing member 2000 itself may replace at least two or more inner beams 1110, or may replace a part or the whole of the side surface frame 1150.

In such a case, since the process of coupling the reinforcing member 2000 with the rigid beam 1170 is not required, the manufacturing process efficiency can be improved and the battery manufacturing cost can be reduced.

The above-mentioned battery pack can be applied to various devices. Such a device can be applied to a vehicle means such as an electric bicycle, an electric vehicle, or a hybrid vehicle, but the present disclosure is not limited thereto, and is applicable to various devices that can use a battery pack.

### [Description of Reference Numerals]

1000: battery pack
1100: lower pack frame
1110: inner beam
1130: additional beam
1150: side surface frame
1170: rigid beam
1200: upper pack frame
2000: reinforcing member
2100: viscous damper
2500: viscoelastic damper

## Claims

1. A battery pack (1000) comprising:
a lower pack frame (1100) on which a plurality of battery modules are mounted;
an upper pack frame (1200) located in the upper part of the plurality of battery modules; and
a rigid beam (1170) included in the lower pack frame (1100),
wherein the rigid beam (1170) comprises at least one reinforcing member (2000) that comprises a viscous damper (2100) or a viscoelastic damper (2500),
wherein the rigid beam (1170) is formed of a hollow structure,
wherein the reinforcing member (2000) is located inside the rigid beam (1170), and
wherein fastening parts (2140) located at both ends of the reinforcing member (2000) are located while being in contact with an inner surface of the rigid beam (1170).

2. The battery pack (1000) according to claim 1 wherein:
two or more reinforcing members (2000) are disposed in the rigid beam (1170).

3. The battery pack (1000) according to claim 1 wherein:
the lower pack frame (1100) comprises a bottom part on which the plurality of battery modules are mounted, side surface frames (1150) that are extended along each edge of the bottom surface of the lower pack frame (1100), and one or more inner beam (1110) that partitions an interior of the lower pack frame (1100).

4. The battery pack (1000) according to claim 3 wherein:
when the inner beams (1110) are provide as a plurality, each of at least two of the inner beams (1110) includes the rigid beam (1170).

5. The battery pack (1000) according to claim 4, further comprising an additional beam (1130) located while being in contact with the inner beam (1110).

6. The battery pack (1000) according to claim 3 wherein:
the rigid beam (1170) is included in the side surface frame (1150).

7. The battery pack (1000) according to claim 6, further comprising an additional beam (1130) located while being in contact with one surface of the side surface frame (1150).

8. The battery pack (1000) according to claim 7 wherein:
one surface of the additional beam (1130) is in contact with the bottom part, and another surface of the additional beam (1130) is located while being in contact with the side surface frame (1150).

9. The battery pack (1000) according to claim 1 wherein:
the lower pack frame (1100) comprises a bottom part on which the plurality of battery modules are mounted, side surface frames (1150) that are extended along each edge of the bottom surface of the lower pack frame (1100), and an inner beam (1110) that partitions an interior of the lower pack frame (1100), and
the rigid beam (1170) is weld-coupled with at least one of the side surface frame (1150) and the inner beam (1110).

10. The battery pack (1000) according to claim 1 wherein:
the reinforcing member (2000) is located vertically on the basis of the bottom part of the lower pack frame (1100).

11. The battery pack (1000) according to claim 1 wherein:
the reinforcing member (2000) is located horizontally on the basis of the bottom part of the lower pack frame (1100).

## Patentansprüche

1. Batteriepack (1000), umfassend:
einen unteren Packrahmen (1100), auf dem eine Vielzahl von Batteriemodulen angebracht ist;
einen oberen Packrahmen (1200), der sich im oberen Teil der Vielzahl von Batteriemodulen befindet; und
einen starren Träger (1170), der in dem unteren Packrahmen (1100) enthalten ist,
wobei der starre Träger (1170) wenigstens ein Verstärkungselement (2000) umfasst, das einen viskosen Dämpfer (2100) oder einen viskoelastischen Dämpfer (2500) umfasst,
wobei der starre Träger (1170) als Hohlkörper ausgebildet ist,
wobei sich das Verstärkungselement (2000) im Inneren des starren Trägers (1170) befindet, und
wobei Befestigungsteile (2140), die sich an beiden Enden des Verstärkungselements (2000) befinden, in Kontakt mit einer Innenfläche des starren Trägers (1170) angeordnet sind.

2. Batteriepack (1000) nach Anspruch 1, wobei:
zwei oder mehr Verstärkungselemente (2000) in dem starren Träger (1170) angeordnet sind.

3. Batteriepack (1000) nach Anspruch 1, wobei:
der untere Packrahmen (1100) einen Bodenteil, auf dem die mehreren Batteriemodule montiert sind, Seitenflächenrahmen (1150), die sich entlang jeder Kante der Bodenfläche des unteren Packrahmens (1100) erstrecken, und einen oder mehrere innere Träger (1110) umfasst, die einen Innenraum des unteren Packrahmens (1100) unterteilen.

4. Batteriepack (1000) gemäß Anspruch 3, wobei:
wenn mehrere inneren Träger (1110) vorgesehen sind, umfasst jeder von wenigstens zwei der inneren Träger (1110) den starren Träger (1170).

5. Batteriepack (1000) nach Anspruch 4, das ferner einen zusätzlichen Träger (1130) umfasst, der so angeordnet ist, dass er mit dem inneren Träger (1110) in Kontakt steht.

6. Batteriepack (1000) gemäß Anspruch 3, wobei:
der starre Träger (1170) in dem Seitenflächenrahmen (1150) enthalten ist.

7. Batteriepack (1000) nach Anspruch 6, das ferner einen zusätzlichen Träger (1130) umfasst, der so angeordnet ist, dass er mit einer Oberfläche des Seitenflächenrahmens (1150) in Kontakt steht.

8. Batteriepack (1000) gemäß Anspruch 7, wobei:
eine Fläche des zusätzlichen Trägers (1130) in Kontakt mit dem Bodenteil steht und eine andere Fläche des zusätzlichen Trägers (1130) in Kontakt mit dem Seitenflächenrahmen (1150) steht.

9. Batteriepack (1000) nach Anspruch 1, wobei:
der untere Packrahmen (1100) einen Bodenteil, auf dem die Vielzahl von Batteriemodulen montiert ist, Seitenflächenrahmen (1150), die sich entlang jeder Kante der Bodenfläche des unteren Packrahmens (1100) erstrecken, und einen inneren Träger (1110) umfasst, der einen Innenraum des unteren Packrahmens (1100) unterteilt, und
der starre Träger (1170) mit wenigstens einem der Seitenflächenrahmen (1150) und dem inneren Träger (1110) verschweißt ist.

10. Batteriepack (1000) nach Anspruch 1, wobei:
das Verstärkungselement (2000) vertikal auf der Basis des Bodenteils des unteren Packrahmens (1100) angeordnet ist.

11. Batteriepack (1000) nach Anspruch 1, wobei:
das Verstärkungselement (2000) horizontal auf der Basis des unteren Teils des unteren Packrahmens (1100) angeordnet ist.

## Revendications

1. Bloc-batterie (1000) comprenant :
un châssis de bloc inférieur (1100) sur lequel sont montés une pluralité de modules de batterie ;
un châssis de bloc supérieur (1200) situé dans la partie supérieure de la pluralité de modules de batterie ;
une traverse rigide (1170) comprise dans le châssis de bloc inférieur (1100),
la traverse rigide (1170) comprenant au moins un élément de renfort (2000) muni d'un amortisseur hydraulique (2100) ou d'un amortisseur viscoélastique (2500),
la traverse rigide (1170) étant composée d'une structure creuse,
l'élément de renfort (2000) étant situé à l'intérieur de la traverse rigide (1170), et
des pièces de fixation (2140), situées aux deux bouts de l'élément de renfort (2000), étant positionnées tandis qu'elles se trouvent au contact d'une surface intérieure de la traverse rigide (1170).

2. Bloc-batterie (1000) selon la revendication 1,
deux ou plusieurs éléments de renfort (2000) étant disposés dans la traverse rigide (1170).

3. Bloc-batterie (1000) selon la revendication 1,
le châssis de bloc inférieur (1100) comprenant une partie inférieure sur laquelle la pluralité de modules de batterie sont montés, des cadres de surface latérale (1150), placés le long de chaque bord de la surface inférieure du châssis de bloc inférieur (1100), et une ou plusieurs traverses intérieures (1110) cloisonnant un intérieur du châssis de bloc inférieur (1100).

4. Bloc-batterie (1000) selon la revendication 3,
les traverses intérieures (1110) étant agencées sous forme d'une pluralité, chacune d'au moins deux des traverses intérieures (1110) comprenant la traverse rigide (1170).

5. Bloc-batterie (1000) selon la revendication 4, comprenant en outre une traverse supplémentaire (1130) positionnée tandis qu'elle se trouve au contact de la traverse intérieure (1110).

6. Bloc-batterie (1000) selon la revendication 3,
la traverse rigide (1170) étant comprise dans le cadre de surface latérale (1150).

7. Bloc-batterie (1000) selon la revendication 6, comprenant en outre une traverse supplémentaire (1130) positionnée tandis qu'elle se trouve au contact d'une surface du cadre de surface latérale (1150).

8. Bloc-batterie (1000) selon la revendication 7,
une surface de la traverse supplémentaire (1130) se trouvant au contact de la partie inférieure, et une autre surface de la traverse supplémentaire (1130) étant positionnée alors qu'elle se trouve au contact du cadre de surface latérale (1150).

9. Bloc-batterie (1000) selon la revendication 1,
le châssis de bloc inférieur (1100) comprenant une partie inférieure sur laquelle sont montés la pluralité de modules de batterie, des cadres de surface latérale (1150) déployés le long de chaque bord de la surface inférieure du châssis de bloc inférieur (1100), et une traverse intérieure (1110) cloisonnant un intérieur du châssis de bloc inférieur (1100), et
la traverse rigide (1170) étant couplée par soudage avec au moins un du cadre de surface latérale (1150) et de la traverse intérieure (1110).

10. Bloc-batterie (1000) selon la revendication 1,
l'élément de renfort (2000) étant positionné verticalement en fonction de la partie inférieure du châssis de bloc inférieur (1100)

11. Bloc-batterie (1000) selon la revendication 1,
l'élément de renfort (2000) étant positionné horizontalement en fonction de la partie inférieure du châssis de bloc inférieur (1100).
